Europäisches Patentamt

European Patent Office

Office européen des brevets

(19)

(11) **EP 0 849 889 B1**

(12) **FASCICULE DE BREVET EUROPEEN**

(45) Date de publication et mention
de la délivrance du brevet:
**17.08.2005 Bulletin 2005/33**

(51) Int Cl.7: **H04B 7/005**

(21) Numéro de dépôt: **97403054.6**

(22) Date de dépôt: **16.12.1997**

(54) **Procédé de réception des signaux sur trajets multiples**

Verfahren zum Mehrwegesignalempfang

Method of multipath signal reception

(84) Etats contractants désignés:
**DE GB IT**

(30) Priorité: **18.12.1996 FR 9615569**

(43) Date de publication de la demande:
**24.06.1998 Bulletin 1998/26**

(73) Titulaire: **COMMISSARIAT A L'ENERGIE
ATOMIQUE**
**75015 Paris (FR)**

(72) Inventeurs:
• **Lattard, Didier**
  **38680 Recurel (FR)**

• **Lequereys, Jean-René**
  **38600 Fontaine (FR)**
• **Daniele, Norbert**
  **38330 Montbonnot (FR)**
• **Piaget, Bernard**
  **38610 Venon (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 661 829          EP-A- 0 673 125**

## Description

### Domaine technique

La présente invention a pour objet un procédé de transmission d'informations par réponse impulsionnelle et un récepteur correspondant.

Elle trouve une application particulière dans la transmission d'informations par la technique dite d'étalement de spectre par séquence directe. Le domaine des applications de l'invention est vaste et comprend les domaines civil et militaire, les télémesures, les radiotéléphones, le téléphone sans fil d'intérieur, les systèmes d'alarmes, les réseaux industriels locaux, le domaine du transport et, d'une façon générale, tous les cas où une transmission est établie dans un milieu de propagation difficile.

### Etat de la technique antérieure

Bien que la présente invention ne se limite pas à la technique de modulation à étalement de spectre par séquence directe, c'est dans ce cadre qu'elle sera exposée.

La technique de modulation à étalement de spectre par séquence directe est utilisée depuis de nombreuses années, en particulier dans les radiocommunications avec les satellites et dans le domaine militaire.

Dans un émetteur de données numériques utilisant une modulation classique, on module une porteuse radioélectrique par une modulation de phase, de fréquence, ou d'amplitude. Pour simplifier l'exposé, on se limitera à la modulation de phase, qui est la plus utilisée.

Les données à transmettre sont des éléments binaires ou bits. Ces bits ont une période notée Tb. Avec ces bits, on peut constituer des symboles $S_k$, (où l'indice k repère le rang du symbole), ces symboles ayant une période notée Ts. Ce sont ces symboles qui vont moduler la porteuse radioélectrique. Un symbole peut comprendre un seul bit, auquel cas Ts=Tb, ou en comprendre 2 ou davantage.

Les symboles $S_k$ (obtenus après codage différentiel dans le cas d'une modulation différentielle de phase) sont multipliés par une séquence pseudoaléatoire ayant un débit binaire M fois plus élevé que le débit des données à transmettre. La durée Tc de l'élément binaire de la séquence pseudoaléatoire (appelé aussi "chip") est donc égale à Ts/M.

Les avantages de cette technique sont multiples :

1. La discrétion : cette discrétion est liée à l'étalement de l'information transmise sur une large bande de fréquence. Il en résulte une faible densité spectrale de la puissance émise.

2. L'accès multiple : plusieurs liaisons à étalement de spectre par séquence directe peuvent partager la même bande de fréquence si l'on utilise des séquences pseudoaléatoires d'étalement orthogonales (séquences possédant une fonction d'intercorrélation qui présente du bruit résiduel très faible pour tous les décalages). Cette technique, qui porte le nom d'accès multiple à répartition par les codes (AMRC en abrégé ou CDMA en anglais), est difficile à mettre en oeuvre car elle impose une gestion critique de la puissance émise. En effet, un récepteur d'une liaison ne doit pas être aveuglé par un émetteur voisin d'une autre liaison.

3. La cohabitation avec les communications à bande étroite classique : la même bande de fréquence peut être partagée par les systèmes utilisant une modulation à bande étroite et ceux qui utilisent une modulation à large bande. Les communications à bande étroite ne souffrent qu'une légère augmentation du bruit radioélectrique ambiant ; les communications à modulation à étalement de spectre rejettent les modulations à bande étroite grâce à l'opération de corrélation effectuée à la réception.

4. La difficulté d'interception : une transmission à étalement de spectre par séquence directe est difficile à intercepter compte tenu de la faible densité spectrale et du fait que le récepteur doit connaître la séquence d'étalement pour pouvoir démoduler les données.

5. L'excellent comportement dans un environnement multi-trajets : dans ce type d'environnement, la propagation de l'onde radioélectrique s'effectue selon des trajets multiples qui mettent en jeu des phénomènes de réflexion, de diffraction et de diffusion. Souvent, de plus, il n'y a pas de trajet direct stable dans le temps entre l'émetteur et le récepteur. Cette propagation par trajets multiples induit des effets parasites qui tendent à dégrader la qualité de la transmission. Les principaux effets néfastes sont les suivants :

  - l'élargissement de la réponse impulsionnelle : cet effet est lié à ce que les divers trajets arrivant sur le récepteur ont des délais de groupe différents ; cet élargissement de la réponse impulsionnelle impose une valeur limite du débit d'informations à transmettre ; la durée du symbole transmis doit être beaucoup plus élevée que cette largeur de réponse impulsionnelle pour obtenir un taux d'erreur acceptable ;
  - les évanouissements ou "fading" : ces évanouissements ont pour origine la somme vectorielle effectuée au niveau de l'antenne de réception ; cette somme vectorielle peut être destructive lorsque les signaux reçus sont en opposition de phase ; ces fluctuations importantes du niveau reçu existent également dans le cas d'une liaison de point fixe à point fixe ; elles sont, dans ce cas, engendrées par les mouvements de personnel, de véhicules, etc., dans l'environnement radio ; les techniques employées, de manière classique, pour pallier cette défaillance, sont des techniques dites de diversité ; elles consistent à utiliser plusieurs signaux statistiquement indépendants pour retrouver l'information utile (par exemple plusieurs antennes de réception) ;

- le bruit Doppler : l'effet Doppler provoque, à la réception, un décalage en fréquence ; ce décalage est proportionnel à la vitesse de déplacement et au cosinus de l'angle entre le vecteur vitesse et le champ électrique associé à l'onde radioélectrique ; dans un environnement à trajets multiples, puisque les directions d'arrivée des différents trajets sont quelconques, le décalage se traduit par un bruit en fréquence ;

- toutefois, l'excellent comportement dans les canaux à évanouissement nécessite d'utiliser une structure de récepteur asynchrone sans boucle d'asservissement sur le trajet le plus énergétique, comme c'est classiquement le cas dans les communications à étalement de spectre.

La technique de modulation à étalement de spectre par séquence directe est largement décrite dans la littérature spécialisée. On peut citer les ouvrages suivants :

- "CDMA Principles of Spread Spectrum Communication" de Andrew J. VITERBI, Addison Wesley Wireless Communications Series,

- "Spread Spectrum Systems" de Robert C. DIXON, John WILEY and Sons,

- "Spread Spectrum Communications" de Marvin K. SIMON, Jim K. OMURA, Robert A. SCHOLTZ et Barry K. LEVITT, Computer Science Press, 1983, vol. I.

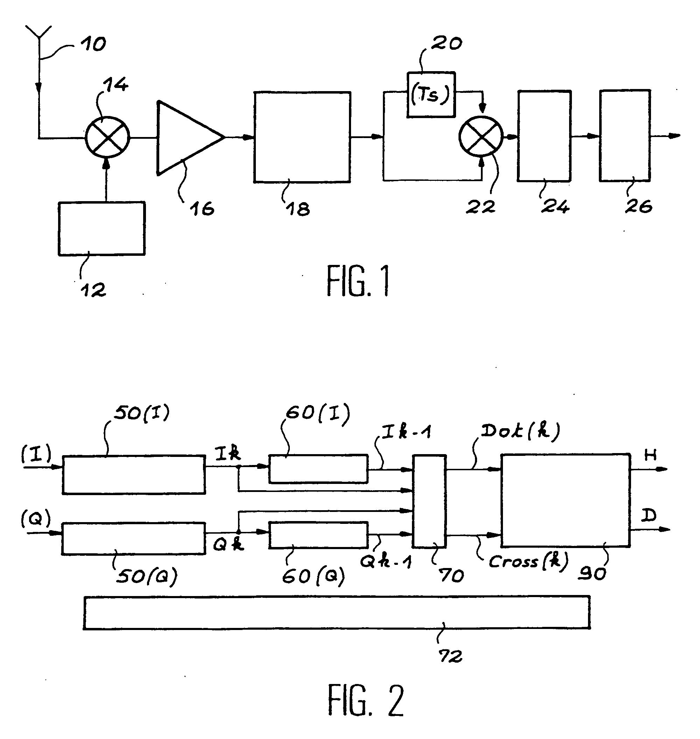

La figure 1 annexée donne le schéma synoptique simplifié d'un récepteur à étalement de spectre dans le cas où l'on a utilisé à l'émission une modulation de type différentiel.

Sur cette figure, on voit un récepteur comprenant une antenne 10, un oscillateur local 12, un multiplieur 14, un amplificateur 16, un filtre adapté 18, une ligne à retard 20, un multiplieur 22, un intégrateur 24 et un circuit de décision 26.

Le principe de fonctionnement de ce récepteur est le suivant.

Le filtre adapté 18 réalise l'opération de corrélation entre le signal reçu et la séquence d'étalement qui a été utilisée pour émettre les données. Le principe de la modulation différentielle de phase choisi à l'émission entraîne que l'information est portée par la différence de phase entre les signaux à la sortie du filtre adapté 18 et à la sortie de la ligne à retard 20. Cette information est restituée par le multiplieur 22.

A chaque trajet de propagation correspond un pic de corrélation à la sortie du multiplieur 22. Le rôle de l'intégrateur 24 consiste à prendre en compte les informations apportées par chacun des trajets de propagation. Les trajets de propagation étant, dans un environnement à trajets multiples, statistiquement indépendants, on réalise donc bien, avec cette technique particulière de récepteur, un traitement à base de diversité, dont l'ordre peut être élevé lorsque la réponse impulsionnelle est complexe. Le circuit de décision 26 permet de récupérer la donnée émise et, en outre, de régénérer l'horloge.

La difficulté de mise en oeuvre de ce récepteur à étalement de spectre par séquence directe tient à la réalisation des fonctions de filtrage adapté et de retard. Une solution classique pour réaliser ces fonctions consiste à utiliser des dispositifs à ondes acoustiques de surface.

Une technique originale préconise de réaliser par un seul composant les deux fonctions de filtrage adapté et de filtrage adapté et retardé. Ce composant est décrit dans le document FR-A-2 696 298. Le récepteur comprend alors :

- un premier corrélateur assurant la fonction de filtrage adapté (corrélation entre un signal appliqué à son entrée et la séquence pseudo-aléatoire utilisée à l'émission),

- un second corrélateur dont le signal de sortie est retardé d'une durée égale à la durée d'un symbole émis Ts ; dans ce cas, le retard est engendré par le temps de propagation de l'onde acoustique sur le substrat quartz.

Bien que donnant satisfaction à certains égards, cette solution présente des inconvénients :

- la séquence pseudo-aléatoire est gravée sur le substrat du composant sous forme de peigne d'électrodes ; elle n'est donc pas programmable ; d'où une absence de souplesse,

- les pertes d'insertion dues au composant sont très importantes (environ 40 dB) ; ces pertes entraînent une complexité accrue de l'étage amplificateur ;

- cette structure du composant limite, pour des raisons de taille, la longueur maximale des séquences pseudo-aléatoires à environ 511 chips ;

- l'accès au bas débit est difficile, compte tenu de la taille de la ligne à retard qu'il convient de réaliser.

Une autre technique pour réaliser les fonctions de filtrage adapté et de retard commence à apparaître à la suite des progrès réalisés en microtechnologie. Cette technique fait appel à des circuits spécifiques numériques. On peut citer, par exemple, le circuit STEL2000A de STANDFORD TELECOM.

Dans cet esprit, la demande de brevet français FR-A- 2742014 décrit un circuit numérique dont le schéma synoptique est illustré sur la figure 2. Ce récepteur comprend deux voies analogues, l'une pour traiter la partie I du signal en phase avec la porteuse et l'autre pour traiter la partie Q en quadrature avec cette même porteuse.

La voie I comprend des premiers moyens de filtrage adaptés 50(I), aptes à remplir une première fonction de filtrage correspondant à la séquence pseudoaléatoire utilisée à l'émission ; ces premiers moyens délivrent des échantillons $I_k$. La voie I comprend encore des premiers moyens de retard 60(I) aptes à remplir une première fonction de retard d'une durée égale à la période Ts des symboles et délivrant des échantillons $I_{k-1}$.

La voie Q comprend des seconds moyens de filtrage adapté 50(Q), aptes à remplir une seconde fonction de filtrage, correspondant toujours à la séquence pseudoaléatoire ; ces seconds moyens délivrent des échantillons $Q_k$ ; la voie Q comprend en outre des seconds moyens de retard 60(Q) aptes à remplir une fonction de retard d'une durée Ts et délivrant des échantillons $Q_{k-1}$.

Le multiplieur 70 délivre des combinaisons de produits de ces échantillons et notamment un signal noté Dot (k) qui est égal à $I_k I_{k-1} + Q_k Q_{k-1}$ et un signal noté Cross(k) égal à $Q_k I_{k-1} - I_k Q_{k-1}$. Le circuit de la figure 2 se complète par un moyen de programmation 72.

Pour comprendre l'intérêt des signaux Dot(k) et Cross(k), on rappelle qu'une porteuse de pulsation w, modulée en phase par une fonction P(t), conduit à un signal modulé s(t) qui peut s'écrire sous la forme :

$$s(t)=A(t)\cos[wt+P(t)] \text{ où } A(t) \text{ représente l'amplitude du signal.}$$

Cette expression peut se développer en :

$$s(t)=A(t)\cos wt \cos P(t)-A(t)\sin wt \sin P(t)$$

Si l'on note $I(t)=A(t)\cos P(t)$ le signal en phase avec la porteuse et $Q(t)=A(t)\sin P(t)$ le signal en quadrature avec la porteuse, le signal s(t) peut être exprimé sous la forme :

$$s(t)=I(t)\cos wt-Q(t)\sin wt$$

Si l'on passe dans le domaine complexe, on peut écrire le signal s(t) sous la forme complexe :

$$S(t)=U(t)\exp(jwt) \text{ avec } U(t)=I(t)+jQ(t).$$

Le signal réel s(t) est la partie réelle du signal complexe S (t). Ainsi, le traitement du signal s(t) peut-il être effectué en traitant les deux signaux I(t) et Q(t), qui seront notés I et Q dans la suite. Ces deux signaux sont appelés signaux en bande de base. Ils peuvent être facilement obtenus par une multiplication entre le signal reçu et un signal en phase avec la porteuse (pour I) et un signal en quadrature avec la porteuse (pour Q).

Dans une liaison où une modulation différentielle est utilisée, le démodulateur doit effectuer, à la réception, le produit de l'échantillon $S_k$ obtenu à l'instant t et de l'échantillon conjugué de $S_{k-1}$ obtenu à l'instant t-Ts où Ts est la durée des symboles. Ce produit peut se développer comme suit :

$$(I_k+jQ_k)\text{x}(I_{k-1}+jQ_{k-1})^*=I_k I_{k-1}+Q_k Q_{k-1}+j(Q_k I_{k-1}-I_k Q_{k-1}) =Dot(k)+jCross(k)$$

avec $Dot(k)=I_k I_{k-1}+Q_k Q_{k-1}$ et $Cross(t)=Q_k I_{k-1}-I_k Q_{k-1}$

C'est précisément le rôle du circuit 70 de former ces signaux Dot(k) et Cross(k) à partir des échantillons $I_k$, $I_{k-1}$, $Q_k$, $Q_{k-1}$, signaux qui véhiculent l'information recherchée.

La solution qui vient d'être décrite ne remédie pas au problème général de ce type de récepteur, lequel tient à ce que, à la sortie du démodulateur, le signal qui apparaît représente soit un signal proportionnel à l'énergie véhiculée sur un trajet de propagation donné (énergie égale au carré de l'amplitude de l'écho reçu), soit du bruit.

Le simple traitement d'intégration, effectué dans un récepteur différentiel de type connu, correspond donc à la somme non seulement des énergies véhiculées par tous les trajets de propagation mais également des signaux non représentatifs de trajets de propagation, ce qui détériore le rapport signal sur bruit. En d'autres termes, dans cette technique, on ne sépare pas les pics de corrélation.

Une technique a cependant été imaginée pour tenter de s'affranchir du bruit existant entre les pics de corrélation. Il s'agit de la technique appelée RAKE ("râteau" en anglais). Elle consiste à isoler un certain nombre de trajets de propagation et à ajouter uniquement les énergies véhiculés par ces trajets. Dans cette approche, un certain nombre de filtres adaptés (corrélateurs) permettent de sonder un canal et donc de placer les dents du "râteau", d'autres corrélateurs permettant de traquer les trajets les plus énergétiques. Un traitement permet ensuite de sommer les carrés des amplitudes des trajets retenus.

Sur les architectures de type RAKE utilisant une modulation cohérente, on peut se reporter à l'article intitulé "ASIC Implementation of a Direct-Sequence Spread-Spectrum RAKE-Receiver" par Stephen D. LINGWOOD, Hans KAUFMANN, Bruno HALLER, publié dans IEEE Vehicular Technology Conference VTC'94, Stockolm, Juin 1994,pp. 1-5.

Mais cette solution présente encore des inconvénients :

- de façon pratique, seul un nombre limité de trajets de propagation peuvent être traqués (2 à 4 en pratique dans les réalisations connues) ; dans le cas de réponse impulsionnelle longue faisant apparaître un grand nombre de trajets distincts, l'ordre de diversité (c'est-à-dire le nombre d'informations statistiquement indépendantes traitées simultanément) est donc limité ; on n'utilise pas toute l'information véhiculée par le canal de transmission,
- les corrélateurs qui permettent de sonder le canal pour positionner les dents du râteau doivent avoir une agilité très grande pour pouvoir s'adapter à d'éventuelles variations rapides du canal de transmission (modulation cohérente).

Pour tenter de remédier à ces inconvénients, il faut reconsidérer à la nature du signal à traiter et essayer d'imaginer un traitement satisfaisant. Dans le cas d'une modulation de phase à 2 états dite DPSK ("Differential Phase Shift Keying"), seul le signal Dot(k) doit être analysé pour retrouver les données émises. Le signal Cross(k) peut cependant être utilisé pour effectuer un contrôle automatique de fréquence.

La figure 3 annexée montre l'allure d'un signal Dot obtenu par simulation, dans le cas où il n'existe qu'un seul trajet de propagation entre l'émetteur et le récepteur. Les pics représentés sont tantôt positifs tantôt négatifs, selon la valeur de l'information binaire transmise. L'intervalle entre deux pics consécutifs correspond à la durée Ts d'un symbole.

Dans le cas d'une modulation de phase à 4 états dite DQPSK (Q pour "Quaternary"), les deux signaux Dot et Cross doivent être examinés simultanément pour retrouver les données émises.

Les figures 4 et 5 donnent respectivement l'allure des signaux Dot et Cross obtenus toujours par simulation dans le cas d'un seul trajet.

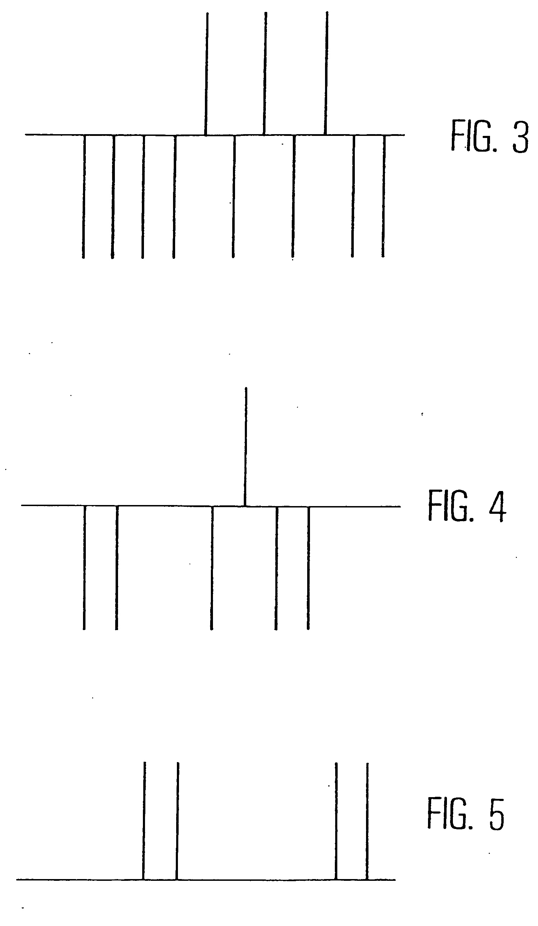

Dans le cas de plusieurs trajets, les pics illustrés sur les figures 3 à 5 seraient doubles, triples, quadruples, etc... pour chaque symbole, le nombre de pics détectés étant égal au nombre de trajets empruntés par l'onde radioélectrique entre émetteur et récepteur.

Un simple intégrateur, comme l'intégrateur 24 de la figure 1, intégré dans le circuit 90 de la figure 2, intègrera tous les signaux présents, c'est-à-dire à la fois les pics (correspondant à une information vraie), et le bruit (ne correspondant à aucune information). Le signal à bruit est donc faible.

La présente invention a justement pour but de remédier à cet inconvénient et d'améliorer ce rapport.

## Exposé de l'invention

L'invention part de l'observation selon laquelle le signal obtenu en prenant la somme des carrés des signaux Dot(k) et Cross(k), puis en extrayant la racine carrée de cette somme, reflète directement la distribution énergétique des différents trajets de propagation, chaque pic ayant pour amplitude l'énergie véhiculée par le trajet correspondant. Selon l'invention, on mesure donc, d'abord, une quantité E(k) définie par :

$$E(k)=[Dot(k)^2+Cross(k)^2]^{1/2}.$$

Selon une autre caractéristique de l'invention, on effectue une opération de moyenne de l'énergie E(k) sur quelques symboles, c'est-à-dire sur quelques valeurs du rang k. Le nombre N symboles pris en compte pour cette estimation de la moyenne doit correspondre à une durée inférieure au temps de cohérence du canal, c'est-à-dire au temps au-delà duquel deux ondes distinctes de même origine n'interfèrent plus. On suppose que sur une durée égale à N fois la durée Ts d'un symbole, le canal de transmission garde ses propriétés de cohérence (hypothèse dite "de stationnarité").

A l'aide de cette moyenne $E^{moy}$, on pondère ensuite les signaux instantanés Dot(k) et Cross(k), par exemple par simple multiplication de Dot(k) et Cross(k) par la valeur $E^{moy}$. On obtient ainsi deux nouveaux signaux dits pondérés, soit Dot(k)$^{moy}$ et Cross(k)$^{moy}$. C'est sur ces signaux pondérés, reflétant la moyenne de l'énergie sur plusieurs symboles, que l'on effectuera ensuite le traitement d'intégration sur une période Ts du symbole, puis la régénération de l'horloge et la récupération des données.

Le moyennage de la sortie instantanée permet de garder, sur les sorties Dot$^{moy}$ et Cross$^{moy}$, les pics correspondants à des trajets de propagation (compte tenu de l'hypothèse vérifiée de stationnarité du canal sur les quelques symboles utilisés) et de diminuer de façon très importante le niveau de bruit généré par l'environnement électromagnétique, un glissement fréquentiel ou une rotation de phase.

Les avantages apportés par l'invention sont alors les suivants :

- amélioration du rapport signal sur bruit des sorties Dot$^{moy}$ et Cross$^{moy}$ avant les étages d'intégration, de récupération de l'horloge et de restitution des données binaires émises,
- prise en compte de toutes les énergies de tous les trajets de propagation (contrairement aux architectures de type RAKE),
- obtention simple d'une estimation de la réponse impulsionnelle du canal de transmission, sans limitation à un certain nombre de chemins considérés comme les plus énergétiques.

L'invention vient d'être définie dans le contexte de l'étalement de spectre par séquence directe ne se limite pas à ce contexte mais est plus générale. Elle est en effet applicable à tous les types de liaisons mettant en oeuvre à des phénomènes de type impulsionnel où l'information est reçue sous forme de plusieurs répliques décalées dans le temps, le canal de transmission obéissant à une règle de stationnarité sur quelques périodes des symboles transmis.

De façon précise, l'invention a donc pour objet un procédé d'amélioration de la transmission d'informations par réponse impulsionnelle d'un canal de transmission, ce procédé consistant à transmettre des symboles d'information à travers un canal de transmission, ce canal présentant plusieurs trajets possibles, ce qui donne naissance à plusieurs signaux reçus pour un même symbole d'information transmis, ce canal étant stable pendant une durée égale à plusieurs périodes de symboles d'information transmis, ce procédé étant caractérisé par le fait qu'on calcule l'énergie desdits plusieurs signaux reçus prenant en compte toutes les énergies de tous les trajets de propagation pendant ladite durée de stabilité du canal, qu'on effectue une moyenne de cette énergie pendant ladite durée de stabilité, qu'on pondère lesdits signaux reçus par l'énergie moyenne, et qu'on traite lesdits signaux pondérés pour restituer l'information.

Selon une variante de ce procédé, on effectue, à l'émission, une modulation différentielle de phase et un étalement de spectre par séquence directe, et, à la réception, on reçoit le signal transmis, on effectue un filtrage adapté à la séquence utilisée à l'émission, pour engendrer des signaux de corrélation, on retarde ces pics de corrélation d'une durée égale à la période des symboles d'information, à partir des signaux de corrélation et des signaux retardés on engendre des pics dont chacun reflète l'information véhiculée le long d'un trajet particulier du canal, ce procédé étant caractérisé par le fait qu'on calcule l'énergie de ces pics, on effectue la moyenne de cette énergie sur plusieurs symboles, on pondère ces pics par la moyenne calculée et l'on traite les pics pondérés pour restituer l'information véhiculée par chaque symbole.

L'invention a également pour objet un récepteur pour la mise en oeuvre du procédé qui vient d'être défini. Ce récepteur comprend les moyens décrits à propos de la figure 2 et il est caractérisé par le fait qu'il comprend en outre :

d) des moyens de calcul pour calculer, pour chaque rang k d'un symbole, les carrés des signaux Dot (k) et Cross (k), pour faire la somme de ces carrés, pour extraire la racine carrée de cette somme, soit $E=[Dot(h)^2+Cross(k)^2]^{1/2}$, pour calculer ensuite la moyenne $E^{moy}$ de cette quantité sur N symboles successifs, N étant un entier défini, et, enfin, pour pondérer chaque signal Dot(k) et Cross(k) par la moyenne $E^{moy}$ précédemment calculée, afin d'obtenir un signal moyen Dot(k)$^{moy}$ et un signal moyen Cross(k)$^{moy}$,

e) un circuit recevant le signal moyen (Dot(k))$^{moy}$ et le signal moyen (Cross(k))$^{moy}$ délivrés par les moyens de calcul, ce circuit étant apte à intégrer ces signaux moyens sur la durée d'un symbole et à restituer l'information correspondante.

**Brève description des dessins**

- la figure 1, déjà décrite, illustre un récepteur connu pour transmission différentielle à étalement de spectre par séquence directe ;
- la figure 2, déjà décrite, illustre un circuit numérique connu, pour le traitement des signaux I et Q ;
- la figure 3, déjà décrite, montre l'allure d'un signal Dot dans le cas d'une modulation différentielle à 2 états de phase (DPSK) ;
- la figure 4, déjà décrite, montre l'allure d'un signal Dot dans le cas d'une modulation différentielle à 4 états de phase (DQPSK) ;
- la figure 5, déjà décrite, montre l'allure d'un signal Cross dans le cas d'une modulation différentielle à 4 états de phase (DQPSK) ;

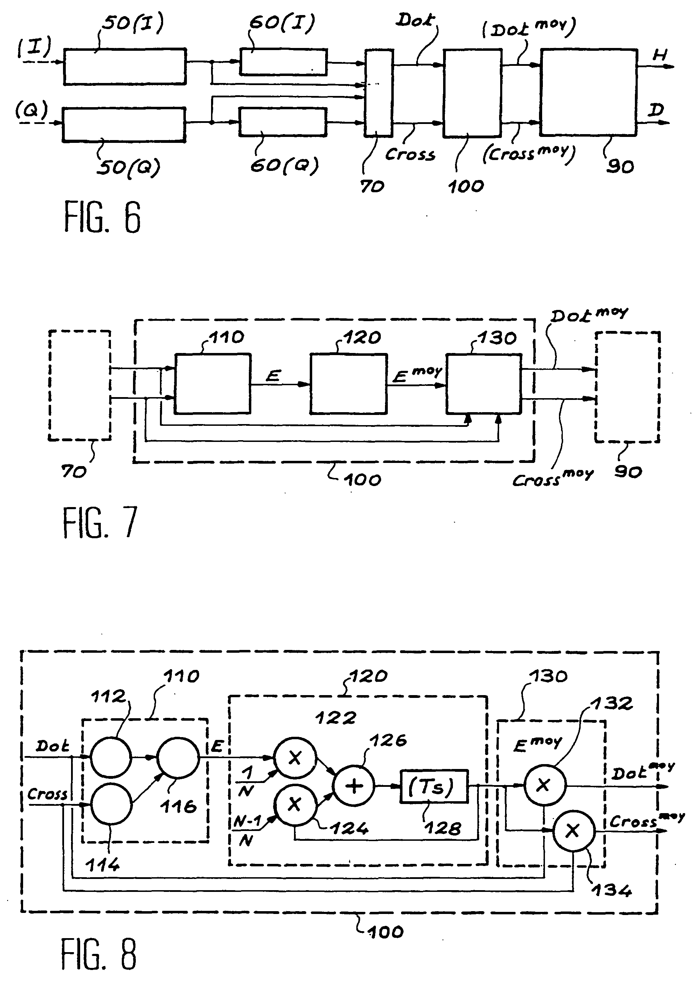

- la figure 6 montre le schéma synoptique d'un récepteur conforme à l'invention ;
- la figure 7 montre le schéma synoptique des moyens permettant le calcul de l'énergie et de la moyenne et l'opération de pondération ;
- la figure 8 illustre un exemple de réalisation d'un circuit capable de déterminer l'énergie, d'en faire la moyenne et d'effectuer une pondération ;

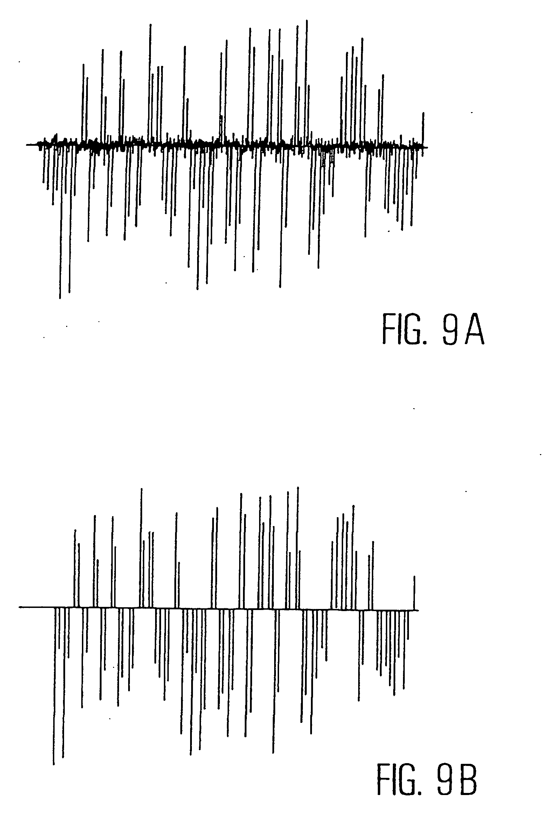

- les figures 9A, 9B montrent le signal Dot (dans le cas d'une modulation DPSK) selon l'art antérieur (9A) et selon l'invention (9B).

**Exposé détaillé d'un mode de réalisation**

On voit, sur la figure 6, un récepteur conforme à l'invention. Ce récepteur comprend des moyens déjà décrits sur la figure 1 et qui portent les mêmes références numériques. Selon l'invention, le récepteur comprend en outre un circuit 100 disposé entre le multiplieur 70 et le circuit 90 de restitution des données et de régénération de l'horloge.

La structure de ce circuit 100 est illustrée sur la figure 7. Il comprend un circuit 110 de calcul de l'énergie E, un circuit 120 de calcul de la moyenne $E^{moy}$, et un circuit 130 de pondération des signaux Dot et Cross (dans la suite, pour simplifier, le rang k est omis dans les notations). Le circuit 110 reçoit les signaux Dot et Cross du circuit 70 qui précède, et le circuit 130 délivre les signaux pondérés par la moyenne, soit $Dot^{moy}$ et $Cross^{moy}$, signaux pondérés qui sont ensuite appliqués au circuit 90.

La figure 8 illustre un mode possible de réalisation de ces circuits. L'énergie E peut être estimée par la détermination du maximum des valeurs absolues des signaux Dot et Cross. Le circuit 110 comprend pour cela deux circuits 112 et 114 de détermination de ces valeurs absolues et un circuit 116 de détermination du maximum pris par ces valeurs absolues.

Le calcul de la moyenne $E^{moy}$ peut être effectué par un filtre récursif défini par sa transformée en Z :

$$H(Z)=(1/N)E+((N-1)/N)Z^{-M},$$

où N définit un nombre de symboles correspondant à un temps inférieur au temps de cohérence du canal de transmission et M le nombre de chips de la séquence pseudo-aléatoire. Le terme $Z^{-M}$ correspond, en fait, à la durée Ts d'un symbole. Le circuit 120 comprend ainsi un premier multiplieur 122, recevant la valeur E et la valeur 1/N, un second multiplieur 124 recevant la valeur (N-1)/N, un additionneur 126 et une ligne à retard 128 d'une durée égale à la période Ts d'un symbole, cette ligne à retard étant rebouclée sur le multiplieur 124. Ce circuit ajoute donc N signaux successifs et divise cette somme par N, ce qui correspond bien à la moyenne recherchée. Cette moyenne est disponible à la sortie de la ligne à retard 128.

La pondération peut être réalisée simplement par deux multiplications :

$$Dot^{moy}=Dot \times E^{moy}$$

$$Cross^{moy}=Cross \times E^{moy}.$$

A cette fin, le circuit 130 comprend, d'une part, un premier multiplieur 132 recevant $E^{moy}$ et le signal Dot et délivrant $Dot^{moy}$ et, d'autre part, un second multiplieur 134 recevant $E^{moy}$ et le signal Cross et délivrant $Cross^{moy}$.

Les figures 9A et 9B présentent les résultats obtenus par simulation, dans le cas d'une modulation DPSK.

La figure 9A montre le signal Dot avec son bruit et la figure 9B ce même signal après pondération, c'est-à-dire, en fait, le signal Dot$^{moy}$. On voit que le bruit apparaissant entre les pics de corrélation est très fortement réduit et que le rapport signal sur bruit est considérablement amélioré.

**Revendications**

1. Procédé d'amélioration de la transmission d'informations par réponse impulsionnelle d'un canal de transmission, ce procédé consistant à transmettre des symboles d'information à travers un canal de transmission, ce canal présentant plusieurs trajets possibles, ce qui donne naissance à plusieurs signaux reçus pour un même symbole d'information transmis, ce canal étant stable pendant une durée égale à plusieurs périodes de symboles d'information transmis, ce procédé étant **caractérisé par le fait qu'**on calcule l'énergie (E) desdits plusieurs signaux reçus prenant en compte toutes les énergies de tous les trajets de propagation pendant ladite durée de stabilité du canal, qu'on effectue une moyenne (E$^{moy}$) de cette énergie pendant ladite durée de stabilité, qu'on pondère lesdits signaux reçus par l'énergie moyenne (E$^{moy}$), et qu'on traite lesdits signaux pondérés pour restituer l'information.

2. Procédé selon la revendication 1, dans lequel, à l'émission, on effectue une modulation différentielle de phase et un étalement de spectre par séquence directe, et dans lequel, à la réception, on reçoit le signal transmis, on effectue un filtrage adapté à la séquence utilisée à l'émission, pour engendrer des signaux de corrélation, on retarde ces pics de corrélation d'une durée égale à la période des symboles d'information, à partir des signaux de corrélation et des signaux retardés on engendre des pics dont chacun reflète l'information véhiculée le long d'un trajet particulier du canal, ce procédé étant **caractérisé par le fait qu'**on calcule l'énergie de ces pics, on effectue la moyenne de cette énergie sur plusieurs symboles, on pondère ces pics par la moyenne calculée et l'on traite les pics pondérés pour restituer l'information véhiculée par chaque symbole.

3. Récepteur différentiel adapté pour recevoir un signal correspondant à une émission d'une porteuse qui a été modulée par des symboles $S_k$ où k est un entier repérant le rang du symbole, chaque symbole ayant une certaine durée (Ts) et véhiculant une information, ces symboles ayant été multipliés par une séquence pseudoaléatoire, ce circuit comprenant :

   a) une première voie de traitement recevant une première partie (I) du signal reçu, cette première partie (I) étant la partie en phase avec la porteuse, cette première voie comprenant :

   i) des premiers moyens de filtrage adapté (50(I)) aptes à remplir une première fonction de filtrage correspondant à ladite séquence pseudoaléatoire utilisée à l'émission et délivrant des échantillons $I_k$,
   ii) des premiers moyens de retard (60(I)) aptes à remplir une première fonction de retard d'une durée Ts et délivrant des échantillons $I_{k-1}$,

   b) une seconde voie de traitement recevant une seconde partie (Q) du signal reçu, cette seconde partie étant la partie en quadrature de phase avec la porteuse, cette seconde voie comprenant :

   i) des seconds moyens de filtrage adapté (50(Q)) aptes à remplir une seconde fonction de filtrage correspondant à ladite séquence pseudoaléatoire et délivrant des échantillons $Q_k$,
   ii) des seconds moyens de retard (60(Q)) aptes à remplir une fonction de retard d'une durée Ts et délivrant des échantillons retardés $Q_{k-1}$,
   c) un circuit de multiplication (70) apte à délivrer un signal noté Dot(k) égal à $I_k I_{k-1}+Q_k Q_{k-1}$ et un signal noté Cross (k) égal à $Q_k I_{k-1}-I_k Q_{k-1}$,

   ce circuit étant **caractérisé en ce qu'**il comprend en outre :
   d) des moyens de calcul (100) pour calculer, pour chaque rang k d'un symbole, les carrés des signaux Dot(k) et Cross(k), pour faire la somme de ces carrés, pour extraire la racine carrée de cette somme, soit $E=[Dot(k)^2+Cross(k)^2]^{1/2}$, pour calculer ensuite la moyenne E$^{moy}$ de cette quantité E sur N symboles successifs, N étant un entier défini, et, enfin, pour pondérer chaque signal Dot(k) et Cross(k) par la moyenne E$^{moy}$ précédemment calculée, pour obtenir un signal moyen Dot(k)$^{moy}$ et un signal moyen Cross(k)$^{moy}$,
   e) un circuit (90) recevant le signal moyen (Dot(k))$^{moy}$ et le signal moyen (Cross(k))$^{moy}$ délivrés par les moyens de calcul (100), ce circuit étant apte à intégrer ces signaux moyens sur la durée d'un symbole (Ts) et à restituer l'information correspondante.

4.  Récepteur selon la revendication 3, dans lequel le circuit (110) de calcul de l'énergie comprend deux moyens (112) (114) de détermination de la valeur absolue des signaux Dot(k) et Cross(k) et un moyen (116) de calcul du maximum de ces valeurs absolues.

5.  Récepteur selon la revendication 3, dans lequel le circuit de calcul de la moyenne comprend un filtre récursif (122, 124, 126, 128).

6.  Récepteur selon la revendication 3, dans lequel le circuit de pondération comprend deux multiplieurs (132, 134) recevant le signal $E^{moy}$ et respectivement lès signaux Dot(k) et Cross(k).

**Claims**

1.  Process for improving the information transmission by pulse response of a transmission channel, said process consisting of transmitting information symbols through a transmission channel, which has several possible paths, which gives rise to several signals received for a same transmitted information symbol, said channel being stable for a time equal to several periods of transmitted information symbols, said process being **characterized in that** a calculation takes place of the energy (E) of said signals received taking account of all the energies of all the propagation paths during said stability time of the channel, followed by an averaging ($E^{moy}$) of said energy during said stability time, the signals received are weighted by the average energy ($E^{moy}$) and said weighted signals are processed in order to restore the information.

2.  Process according to claim 1, wherein on transmission, a phase differential modulation and a direct sequence spread spectrum takes place and, on reception, the transmitted signal is received, a matched filtering being performed on the sequence used on transmission in order to produce correlation signals, said correlation peaks are delayed by a time equal to the period of the information symbols, from the correlation signals and delayed signals are produced peaks, each of which reflects the information carried along the particular path of the channel, said process being **characterized in that** a calculation takes place of the energy of said peaks, the average of said energy is formed on several symbols, said peaks are weighted by the calculated average and the weighted peaks are processed in order to restore the information carried by each symbol.

3.  Differential receiver for receiving a signal corresponding to a transmission of a carrier which has been modulated by the symbols $S_k$, where k is an integer designating the order of the symbol, each symbol having a certain duration (Ts) and carrying an information, said symbols having been multiplied by a pseudorandom sequence, said circuit incorporating:

    a) a first processing channel receiving a first part (I) of the signal received, said first part (I) being the part in phase with the carrier, said first channel having:

    i) first matched filtering means (50(I)) able to fulfil a first filtering function corresponding to said pseudorandom sequence used on transmission and supplying samples $I_k$,
    ii) first delay means (60(I)) able to fulfil a first delay function of a duration Ts and supplying samples $I_{k-1}$,

    b) a second processing channel receiving a second part (Q) of the signal received, said second part being the part in phase quadrature with the carrier, said second channel having:

    i) second matched filtering means (50(Q) able to fulfil a second filtering function corresponding to said pseudorandom sequence and supplying samples $Q_k$,
    ii) second delay means (60(Q)) able to fulfil a delay function of a duration Ts and supplying delayed samples $Q_{k-1}$,

    c) a multiplication circuit (70) able to supply a signal Dot(k) equal to $I_k I_{k-1}+Q_k Q_{k-1}$ and a signal Cross(k) equal to $Q_k I_{k-1}-I_k Q_{k-1}$,
    said circuit being **characterized in that** it also comprises:
    d) calculating means (100) for calculating, for each order k of a symbol, the squares of the signals Dot(k) and Cross(k), in order to form the sum of these squares, for extracting the square root of said sum, i.e. $E=[\text{Dot}(k)^2+\text{Cross}(k)^2]^{1/2}$, for then calculating the mean $E^{moy}$ of said quantity on N successive symbols, N being a defined integer, and finally for weighting each signal Dot(k) and Cross(k) by the previously calculated mean

$E^{moy}$, in order to obtain a mean signal $D(k)^{moy}$ and a mean signal $Cross(k)^{moy}$,
e) a circuit (90) receiving the mean signal $Dot(k)^{moy}$ and the mean signal $Cross(k)^{moy}$ supplied by the calculating means (100), said circuit being able to integrate these mean signals on the time of a symbol and restore the corresponding information.

**4.** Receiver according to claim 3, wherein the circuit (110) for calculating the energy comprises two means (112, 114) for determining the absolute value of the signals Dot(k) and Cross(k) and a means (116) for calculating the maximum of these absolute values.

**5.** Receiver according to claim 3, wherein the mean calculating circuit incorporates a recursive filter (122, 124, 126, 128).

**6.** Receiver according to claim 3, wherein the weighting circuit incorporates two multipliers (132, 134) receiving the signal $E^{moy}$ and respectively the signals Dot(k) and Cross(k).

**Patentansprüche**

**1.** Verfahren zur Verbesserung der Informationsübertragung mittels Impulsantwort eines Übertragungskanals, wobei dieses Verfahren darin besteht, Informationssymbole auf einem Übertragungskanal zu übertragen, der mehrere mögliche Wege aufweist, so dass man für ein selbes übertragenes Informationssignal mehrere Empfangssignale erhält, wobei dieser Kanal während einer Zeitdauer stabil ist, die mehreren Informationssymbol-Übertragungsperioden entspricht,
**dadurch gekennzeichnet, dass** man bei diesem Verfahren die Energie (E) der genannten mehreren Empfangssignale berechnet, indem man während der genannten Stabilitätsdauer des Kanals alle Energien aller Ausbreitungswege berücksichtigt, man einen Mittelwert ($E^{moy}$) dieser Energie während der genannten Stabilitätsdauer errechnet, man die empfangenen Signale durch den Mittelwert ($E^{moy}$) gewichtet und man die gewichteten Signale verarbeitet, um die Information wiederherzustellen.

**2.** Verfahren nach Anspruch 1, bei dem man - beim Senden - eine Phasendifferentialmodulation und eine Direktsequenz-Spektrumsspreizung durchführt, und bei dem man - beim Empfangen - das übertragene Signal empfängt, man ein an die beim Senden benutzte Sequenz angepasstes Filtern durchführt, um Korrelationssignale zu erzeugen, man diese Korrelations-Peaks um eine Dauer gleich der Periode der Informationssymbole verzögert, man aufgrund der Korrelationssignale und der verzögerten Signale Peaks erzeugt, von denen jeder die längs eines speziellen Wegs des Kanals übertragene Information wiedergibt,
**dadurch gekennzeichnet, dass** man bei diesem Verfahren die Energie dieser Peaks berechnet, man den Mittelwert dieser Energie über mehrere Symbole errechnet, man diese Peaks durch den errechneten Mittelwert gewichtet und man die gewichteten Peaks verarbeitet, um die durch jedes Symbol beförderte Information wiederherzustellen.

**3.** Differentialempfänger, angepasst um ein Signal zu empfangen, das einer Sendung eines durch Symbole $S_k$ modulierten Trägers entspricht, wo k eine den Rang des Symbols festlegende ganze Zahl ist, jedes Symbol eine bestimmte Dauer (Ts) hat und eine Information befördert, diese Symbole durch eine Pseudozufallssequenz multipliziert worden sind und diese Schaltung dabei umfasst:

a) einen ersten Verarbeitungskanal, der einen ersten Teil (I) des empfangenen Signals erhält, wobei dieser erste Teil (I) der mit dem Träger phasengleiche Teil ist und dieser erste Kanal dabei umfasst:

i) erste angepasste Filtereinrichtungen (50(I)), fähig eine erste der genannten beim Senden benutzten Zufallssequenz entsprechende Filterfunktion zu erfüllen und dabei Proben $I_k$ zu liefern,
ii) erste Verzögerungseinrichtungen (60(I)), fähig eine erste Verzögerungsfunktion einer Dauer Ts zu erfüllen und dabei Proben $I_{k-1}$ zu liefern,

b) einen zweiten Verarbeitungskanal, der einen zweiten Teil (Q) des empfangenen Signals erhält, wobei dieser zweite Teil (Q) der zu dem Träger um 90° phasenverschobene Teil ist und dieser zweite Kanal dabei umfasst:

i) zweite angepasste Filtereinrichtungen (50(Q)), fähig eine zweite der genannten Zufallssequenz entsprechende Filterfunktion zu erfüllen und dabei Proben $Q_k$ zu liefern,

ii) zweite Verzögerungseinrichtungen (60(Q)), fähig eine Verzögerungsfunktion einer Dauer Ts zu erfüllen und dabei Proben $O_{k-1}$ zu liefern,

c) eine Multiplizierschaltung (70), fähig ein Signal, bezeichnet mit Dot(k) und gleich $I_k I_{k-1}+Q_k Q_{k-1}$, und ein Signal, bezeichnet mit Cross(k) und gleich $Q_k I_{k-1}-I_k Q_{k-1}$, zu liefern,

wobei diese Schaltung **dadurch gekennzeichnet ist, dass** sie außerdem umfasst:

d) Recheneinrichtungen (100), um für jeden Rang k eines Symbols die Quadrate der Signale Dot(k) und Cross (k) zu berechnen, um die Summe dieser Quadrate zu errechnen, um die Quadratwurzel aus dieser Summe zu ziehen, also $E=[Dot(k)^2+Cross(k)^2]^{1/2}$ , um anschließend den Mittelwert $E^{moy}$ dieser Größe E über N aufeinanderfolgende Symbole zu errechnen, wobei N eine definierte ganze Zahl ist, und schließlich, um jedes Signal Dot(k) und Cross(k) durch den vorher errechneten Mittelwert $E^{moy}$ zu gewichten, um ein mittleres Signal $Dot(k)^{moy}$ und ein mittleres Signal $Cross(k)^{moy}$ zu erhalten,

e) eine Schaltung (90), in welche die durch die Recheneinrichtungen (100) gelieferten mittleren Signale (Dot (k))$^{moy}$ und (Cross(k))$^{moy}$ eingespeist werden, wobei diese Schaltung fähig ist, diese mittleren Signale über die Dauer eines Symbols (Ts) zu integrieren und die entsprechende Information wiederherzustellen bzw. auszugeben.

4. Empfänger nach Anspruch 3, bei dem die Schaltung (110) zur Berechnung der Energie zwei Einrichtungen (112) (114) zur Bestimmung des Absolutwerts der Signale Dot(k) und Cross(k) sowie eine Einrichtung (116) zur Berechnung des Maximums dieser Absolutwerte umfasst.

5. Empfänger nach Anspruch 3, bei dem die Schaltung zur Berechnung des Mittelwerts ein rekursives Filter (122, 124, 126, 128) umfasst.

6. Empfänger nach Anspruch 3, bei dem die Gewichtungsschaltung zwei Multiplizierglieder (132, 134) umfasst, in die das Signal $E^{moy}$ und jeweils die Signale Dot(k) und Cross(k) eingespeist werden.

FIG. 1

FIG. 2

FIG. 3

FIG. 4

FIG. 5

FIG. 6

FIG. 7

FIG. 8

FIG. 9 A

FIG. 9 B